# EUROPÄISCHE PATENTSCHRIFT

(11) **EP 2 940 220 B1**
(45) Veröffentlichungstag und Bekanntmachung des Hinweises auf die Patenterteilung: **27.06.2018**
(21) Anmeldenummer: 15164082.8
(22) Anmeldetag: 17.04.2015
(51) Int. Cl.: E03C 1/04

(54) **WANNENFÜLLBATTERIE MIT DREI MISCHWASSERABGÄNGEN**
BATH TUB MIXER WITH THREE MIXED WATER OUTLETS
MITIGEUR POUR BAIGNOIRE À TROIS SORTIES POUR L'EAU MELANGÉE

(30) Priorität: 23.04.2014 DE 202014101920 U
(43) Veröffentlichungstag der Anmeldung: 04.11.2015
(73) Patentinhaber: Ideal Standard International NV, 1935 Zaventem (BE)
(72) Erfinder: Popov, Pavel, 5400 Sevlievo (BG); Bogdanov, Bogdan, 5400 Sevlievo (BG); Iliev, Plamen, 5400 Sevlievo (BG)
(74) Vertreter: Feucker, Max Martin

(56) Entgegenhaltungen:
- WO-A1-2007/080237
- CN-U- 202 381 763
- DE-A1-102010 018 671

## Beschreibung

Die Erfindung betrifft eine Mischbatterie mit drei Mischwasser-abgängen, nämlich einem Wannenauslauf und je einem Mischwasserabgang für eine Kopfbrause und eine Handbrause.
Aus der DE 10 2004 054 986 A1 ist eine übliche Wannenfüllbatterie bekannt, die einen als Wannenauslauf ausgebildeten und insoweit einen einstückigen Bestandteil des Batteriekörpers bildenden Mischwasserabgang aufweist. In den Wannenauslauf ist ein Anschluss für eine Handbrause als weiterer Mischwasserabgang integriert, wobei in den zum Wannenauslaufmundstück führenden Wasserweg eine Umstelleinheit eingeschaltet ist, mittels deren Betätigung das Mischwasser entweder zum Wannenauslaufmundstück oder in die angeschlossene Handbrause gelenkt wird. Soweit der langgestreckt ausgebildete Batteriekörper an einer Längsseite jeweils einen Wasseranschluss für das zuzuführende kalte und warme Wasser aufweist, weist der Batteriekörper auf seiner Oberseite eine Gehäuseerweiterung auf, in welcher stehend eine Mischkartusche angeordnet ist, die ihrerseits von einem oben aufgesetzten Handhebel steuerbar ist. Somit ist die Mengen- und Temperatureinstellung für das Mischwasser nach dem bekannten Prinzip eines Einhebelmischers ausgebildet.
Es besteht ein latentes Bedürfnis, an einer Wannenfüllbatterie zusätzlich zu dem daran in bekannter Weise ausgebildeten Mischwasserabgang für eine Handbrause auch einen Mischwasserabgang für eine anzuschließende Kopfbrause möglich zu machen.

Hierzu ist beispielsweise aus der US 8 191 185 B2 bekannt, im Rahmen einer Duschanordnung an einer an eine Wasserzufuhr angeschlossenen Zentraleinheit drei Wasserwege mit entsprechend drei Mischwasserabgängen auszubilden, nämlich für einen Duschkopf, eine Handbrause und zusätzlich eine Kopfbrause. Zu diesem Zweck ist die Zentraleinheit mit einer 3-Wege-Umschaltung eingerichtet.

Eine weitere Wannenfüllbatterie ist aus DE 10 2010 018 671 A1 bekannt. Mit der Einstellvorrichtung an der einen Seite kann lediglich die Temperatur des Mischwassers voreingestellt werden. Die Umschaltkartusche an der anderen Seite ermöglicht lediglich die Umschaltung zwischen zwei Wasserwegen, wobei hierbei auch die Menge des Wassers eingestellt werden kann. Zur Zuschaltung einer weiteren Brauseanordnung ist vorgesehen, dass sich der eine von der Umschaltkartusche wegführende Wasserweg nochmals aufteilt, wobei einer der aufgeteilten Wasserwege durch ein zusätzliches Absperrorgan geschlossen oder geöffnet werden kann. Die Bedienung der Mischbatterie mit den drei Einstellorganen ist daher relativ kompliziert.

Aus WO 2007/080237 A1 ist eine Mischkartusche mit einer Hebelbedienung bekannt.

Aus CN 202 381 763 U ist eine Wannenfüllbatterie mit den Merkmalen des Oberbegriffs des Anspruchs 1 bekannt. Bei dieser Lösung sind die Kanäle in den Armaturenkörper eingelassen. Dies ist einerseits aufwendig und andererseits muss für jede Änderung der Kanäle ein neues Gießwerkzeug erstellt werden.

Der Erfindung liegt daher die Aufgabe zugrunde, eine Mischbatterie mit den eingangs genannten Merkmalen so weiter zu bilden, dass ihre Bedienung vereinfacht ist.

Die Lösung dieser Aufgabe ergibt sich aus einer Mischbatterie gemäß Anspruch 1. Vorteilhafte Ausgestaltungen und Weiterbildungen der Erfindung ergeben sich aus dem Inhalt der Patentansprüche, welche dieser Beschreibung nachgestellt sind.
Die Erfindung sieht hierzu im Einzelnen vor, dass die Einstellvorrichtung in der Form eines Einhebelmischers mit einem Handhebel und einer von diesem zu betätigenden Mischkartusche zur Einstellung von Menge und Temperatur des Mischwassers ausgebildet ist und dass die Umschaltkartusche eine 3-Wege-Umschaltung ermöglicht.
Somit beruht der erfindungsgemäße Vorschlag auf dem Prinzip, die beiden Funktionseinheiten wie die Mengen- und Temperatureinstellung einerseits sowie die 3-Wege-Umschaltung andererseits jeweils an den Stirnseiten des Batteriekörpers anzuordnen. Damit stehen die Oberseite und/oder die Unterseite des Batteriekörper für die Anordnung der beiden zusätzlich zu einem in unveränderter Weise ausgebildeten Wannenauslauf einzurichtenden Mischwasserabgänge für eine Kopfbrause und eine Handbrause zur Verfügung. Insbesondere ist an der einen Stirnseite die in der Form eines Einhebelmischers ausgebildete Mengen- und Temperatureinstellvorrichtung angeordnet, während an der gegenüberliegenden Stirnseite des Batteriekörpers der Drehgriff für die Umschaltung der Mischwasserabhänge angeordnet ist. In beiden Fällen sind die zugehörigen Funktionseinheiten wie Mischkartusche und Umschaltkartusche stirnseitig in den Batteriekörper eingeschoben.

Somit ist mit der erfindungsgemäßen Ausgestaltung der Wannenfüllbatterie der Vorteil verbunden, dass trotz dreier Mischwasserabgänge eine platzsparende Ausgestaltung des Batteriekörpers gegeben ist.

Im Rahmen der Erfindung ist vorgesehen, dass in dem Batteriekörper einerseits zwischen den Wasseranschlüssen für das kalte und warme Wasser und der Mischkartusche ein Einlassadapter mit zwei Zuleitungskanälen und einem Mischwasserauslass und andererseits mit einem einen Wasserverteilraum in dem Batteriekörper ausbildenden Abstand dazu ein an die Umschaltkartusche angeschlossener Auslassadapter angeordnet ist, der seinerseits einen Mischwasserkanal sowie drei jeweils einzeln an jeden im Batteriegehäuse ausgebildeten Mischwasserabgang angeschlossene Abgangskanäle aufweist, und wobei die Umschaltkartusche über deren Umfang versetzt zueinander angeordnete Umlenkkammern zur jeweiligen Verbindung des Mischwasserkanals des Auslassadapters mit jeweils einem Abgangskanal des Auslassadapters aufweist.

Weiterhin kann vorgesehen sein, dass der an dem Wannenauslauf des Batteriekörpers angeschlossene Abgangskanal des Auslassadapters auf dem Umfang des Auslassadapters endet, so dass das Mischwasser aus dem zugeordneten Abgangskanal unmittelbar in den Wannenauslauf des Batteriekörpers einströmt. Hierbei kann vorgesehen sein, dass die Mischwasserabgänge für den Anschluss der Kopfbrause und der Handbrause an der einander gegenüberliegenden, um 90° zur Ebene der Wasseranschlüsse versetzt angeordneten Oberseite und Unterseite des Batteriekörpers angeordnet sind und im Inneren des Batteriekörpers liegende Verbindungen zwischen dem jeweiligen Mischwasserabgang und den daran anzuschließenden Abgangskanälen des Auslassadapters vorgesehen sind.

In der Zeichnung ist ein Ausführungsbeispiel der Erfindung wiedergegeben, welches nachstehend beschrieben ist. Es zeigen:
- Fig. 1: eine in eine Brauseanordnung eingebundene Wannenfüllbatterie in einer schematischen Darstellung,
- Fig. 2: die Wannenfüllbatterie gemäß Fig. 1 in einer auseinandergezogenen Darstellung ihrer einzelnen Bauteile,
- Fig. 3: die Wannenfüllbatterie in einer Stellung der Umschaltkartusche zum Anschluss des Wannenauslaufes in einer schematisierten Schnittansicht,
- Fig. 4: die Wannenfüllbatterie in einer Perspektivansicht auf das mit dem Drehgriff zur Betätigung der Umschaltkartusche versehene stirnseitige Ende des Batteriekörpers,
- Fig. 5: die Wasserfüllbatterie in einer Stellung der Umschaltkartusche zum Anschluss der Handbrause bzw. der Kopfbrause in einer teilweisen, schematisierten Schnittansicht.

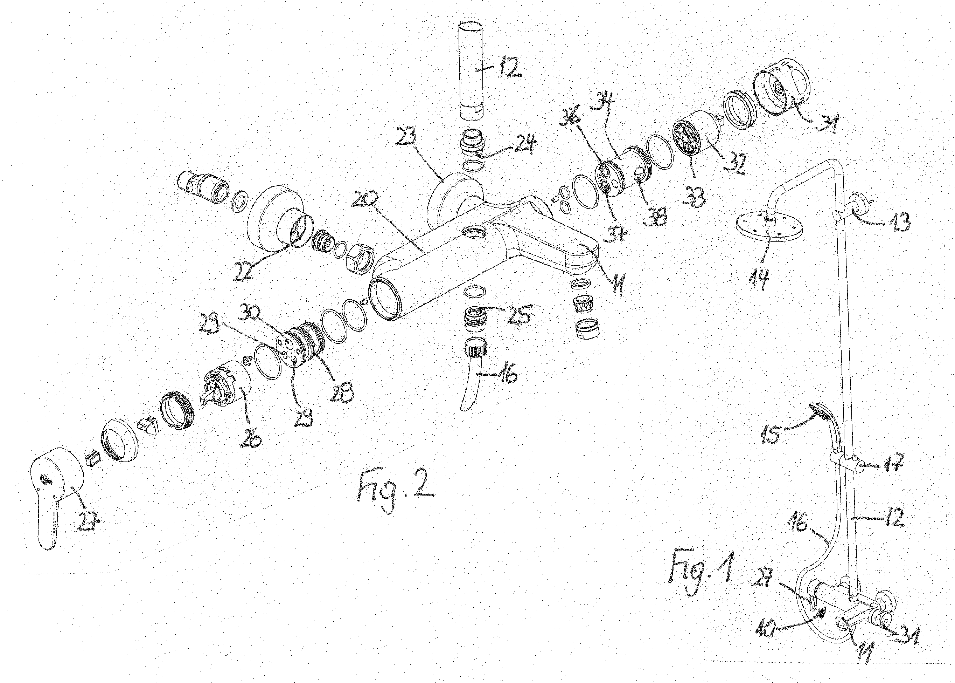

Im Rahmen der in Fig. 1 dargestellten Brauseanordnung ist an eine einen Wannenauslauf 11 aufweisende Wannenfüllbatterie 10 eine wasserführende Duschstange 12 angeschlossen, an deren Ende eine Kopfbrause 14 sitzt. Die Duschstange 12 ist über einen Wandhalter 13 an einer nicht dargestellten Wand festlegbar. Auf der Unterseite der Wannenfüllbatterie 10 ist ein zu einer Handbrause 15 führender Schlauch 16 angeschlossen, wobei die Handbrause 15 in einer an der Duschstange 12 verschiebbaren Halterung 17 eingehängt und daraus entnehmbar ist. Insofern ist die Wannenfüllbatterie 10 in ihrer Bedienung derart einzurichten, dass wahlweise Wannenauslauf 11, Kopfbrause 14 und Handbrause 15 in Betrieb genommen werden können.

Der diesbezügliche Aufbau der Wannenfüllbatterie ergibt sich aus Fig. 2. Die Wannenfüllbatterie 10 besteht aus einem Batteriekörper 20, an welchem einstückig der Wannenauslauf 11 angeordnet ist, wobei diesem Wannenauslauf 11 ein erster Mischwasserabgang 21 zugeordnet ist. Auf seiner dem Wannenauslauf 11 gegenüberliegenden Rückseite weist der Batteriekörper 20 einen Wasseranschluss 22 für das kalte Wasser und einen Wasseranschluss 23 für das warme Wasser auf. An seiner Oberseite ist ein Mischwasserabgang 24 zum Anschluss der zur Kopfbrause 14 führenden Duschstange 12 vorgesehen, während an der gegenüberliegenden Unterseite des Batteriekörpers ein Mischwasserabgang 25 für den Anschluss des zur Handbrause 15 führenden Schlauches 16 vorgesehen ist.

An der bei dem dargestellten Ausführungsbeispiel linken Stirnseite des Batteriekörpers 20 ist eine Vorrichtung zur Mengen- und Temperatureinstellung des in der Wannenfüllbatterie 10 zu erzeugenden Mischwassers angeordnet, die nach Art eines Einhebelmischers aus einer stirnseitig in die diesbezügliche Öffnung des Batteriekörpers 20 eingeschobenen Mischkartusche 26 und einem daran angeschlossenen, auf den Batteriekörper 20 aufgesetzten Handhebel 27 besteht. Soweit in der Zeichnung hierzu noch weitere Einzelteile dargestellt sind, entsprechen diese dem üblichen Aufbau und sind für die Ausgestaltung der Erfindung nicht weiter von Bedeutung. Entsprechendes gilt auch für die in Figur 2 im Einzelnen dargestellten Dichtungen, auf deren Benennung nachstehend verzichtet ist.

An die Mischkartusche 26 schließt innenseitig des Batteriekörpers 20 ein Zuflussadapter 28 an, in welchem zwei mit den Wasseranschlüssen 22 bzw. 23 in Verbindung zu bringende Zuleitungskanäle 29 und ein Mischwasserabgang für das in der Mischkartusche 26 erzeugte Mischwasser ausgebildet sind.

An dem gegenüberliegenden stirnseitigen Ende des Batteriekörpers 20 ist ein Drehgriff 31 zur Betätigung einer in die diesbezügliche stirnseitige Öffnung des Batteriekörpers 20 eingeschobenen Umschaltkartusche 32 angeordnet, wobei an die Umschaltkartusche 32 stirnseitig ein Auslassadapter 34 angeschlossen ist, in welchem ein Mischwasserkanal 35 für die Zuleitung von Mischwasser zu der Umschaltkartusche 32 sowie parallel dazu zwei Abgangskanäle 36, 37 angeordnet sind, deren Funktion noch erläutert wird. Zusätzlich ist in dem Auslassadapter 34 ein an dessen Umfangsfläche endender dritter Abgangskanal 38 als Mischwasserabgang 21 ausgebildet. Zur Verbindung des der Umschaltkartusche 32 zugewandten Endes des Mischwasserkanals 35 im Auslassadapter 34 mit einem der drei im Auslassadapter 34 ausgebildeten Abgangskanäle 36, 37, 38 sind in der Stirnseite der Umschaltkartusche 32 Umlenkkammern 33 derart angeordnet, dass in Abhängigkeit von der Drehstellung der Umschaltkartusche 32 relativ zu dem feststehenden Auslassadapter 34 der Mischwasserkanal 35 jeweils mit einem der Abgangskanäle 36 oder 37 oder 38 verbindbar ist.

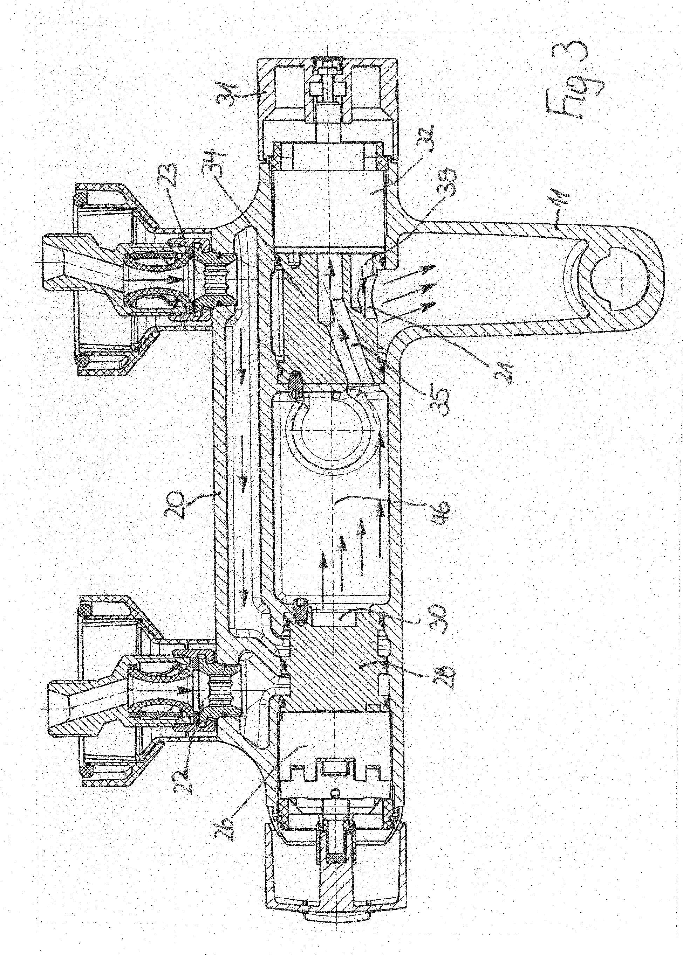

Wie sich im Einzelnen aus Figur 3 ergibt, strömt das über die Wandanschlüsse 22 und 23 in den Batteriekörper 20 eingeleitete kalte und warme Wasser radial in den Zuflussadapter 28 und über die darin ausgebildeten Zuleitungskanäle 29 in die Mischerkartusche 26. Das in der Mischkartusche 26 gemischte Mischwasser strömt über den Mischwasserabgang 30 des Zuflussadapters 28 in einen Wasserverteilraum 46, der im Inneren des Batteriekörpers 20 durch entsprechende, zur Festlegung des jeweils daran anstoßenden Zuflussadapters 28 und Auslassadapters 34 eingerichtete Trennwände abgeteilt ist. In den beiden adapterseitigen Trennwänden ist jeweils eine Öffnung zum Zutritt des Mischwassers aus dem Zuflussadapter 28 und zum Eintritt des Mischwassers in den Mischwasserkanal 35 des Auslassadapters 34 angeordnet. In der aus Figur 3 ersichtlichen Stellung der Umschaltkartusche 32 tritt das den an eine zentrale Kammer der Umschaltkartusche 32 angeschlossenen Mischwasserkanal 35 des Auslassadapter 34 durchströmende Mischwasser in eine zugeordnete Umlenkkammer 33 der Umschaltkartusche 32 ein, die eine Verbindung zum auf dem Umfang des Auslassadapters 34 endenden Abgangskanal 38 ein und strömt von hier aus in den Wannenauslauf 11. Wie sich dazu aus Fig. 3a ergibt, weist der Drehgriff 31 eine passende Markierung 40 auf, die den Wasserweg über den Wannenauslauf kennzeichnet. Diese am Drehgriff 31 befindliche Markierung 40 steht in dieser Stellung vor einer am Batteriekörper 20 angebrachten Markierung 41, wobei passend an dem Drehgriff 31 eine Daumeneinbuchtung 42 ausgebildet ist, um die Verdrehung des Drehgriffes 31 in eine andere Stellung zu erleichtern.

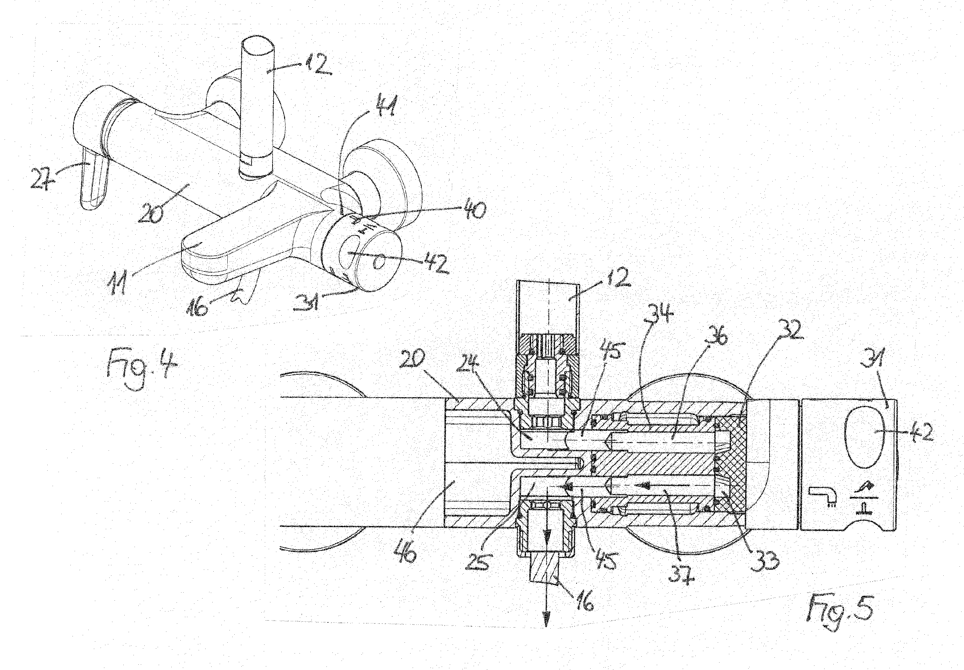

Wie sich aus Figur 4 entnehmen lässt, in welcher nur der rechte Teil des Batteriekörpers 20 mit einem links außen liegenden Teilbereich des Wasserverteilraumes 46 dargestellt ist, sind die beiden in dem Auslassadapter 34 in einem parallelen Verlauf zueinander ausgebildeten Abgangskanäle 36 und 37 jeweils über Verbindungen 45 an die beiden Mischwasserabgänge 24 und 25 angeschlossen. Durch Drehung des Drehgriffes 31 kann die aus Figur 3 ersichtliche zentrale Umlenkkammer für das zuströmende Mischwasser durch Einstellung einer zugeordneten Umlenkkammer 33 mit dem jeweils zu wählenden Abgangskanal 36 bzw. 37 verbunden und somit eine Strömung des Mischwassers zum Mischwasserabgang 24 bzw. zum Mischwasserabgang 25 eingerichtet werden.

Die in der vorstehenden Beschreibung, den Patentansprüchen und den Zeichnungen offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Mischbatterie (10) mit drei Mischwasserabgängen (21, 24, 25), nämlich einem Wannenauslauf (11) und je einem Mischwasserabgang für eine Kopfbrause (14) und eine Handbrause (15), wobei ein langgestreckt ausgebildeter Batteriekörper (20) an einer Längsseite je einen Wasseranschluss (22, 23) für das dem Batteriekörper (20) zuzuführende kalte und warme Wasser aufweist und auf den einander gegenüberliegenden Stirnseiten des Batteriekörpers (20) einerseits eine Einstellvorrichtung für eine Temperatur eines über die Mischwasserabgänge (21, 24, 25) auszubringenden Mischwassers und andererseits eine mittels eines Drehgriffes (31) zu betätigende Umschaltkartusche (32) zur wahlweisen Zuschaltung eines Mischwasserabganges an die Einstellvorrichtung angeordnet ist, wobei die Einstellvorrichtung in der Form eines Einhebelmischers mit einem Handhebel (27) und einer von diesem zu betätigenden Mischkartusche (26) zur Einstellung von Menge und Temperatur des Mischwassers ausgebildet ist und dass die Umschaltkartusche (32) eine 3-Wege-Umschaltung ermöglicht, wobei in dem Batteriekörper (20) einerseits zwischen den Wasseranschlüssen (22, 23) für das kalte und warme Wasser und der Mischkartusche (26) ein Einlassadapter (28) mit zwei Zuleitungskanälen (29) und einem Mischwasserauslass (30) und andererseits mit einem einen Wasserverteilraum (46) in dem Batteriekörper (20) ausbildenden Abstand dazu ein an die Umschaltkartusche (32) angeschlossener Auslassadapter (34) angeordnet ist, der seinerseits einen Mischwasserkanal (35) sowie jeweils einzeln an jeden im Batteriegehäuse (20) ausgebildeten Mischwasserabgang (21, 24, 25) angeschlossene Abgangskanäle (36, 37, 38) aufweist, **dadurch gekennzeichnet, dass** die Umschaltkartusche (32) über deren Umfang versetzt zueinander angeordnete Umlenkkammern (33) zur jeweiligen Verbindung des Mischwasserkanals (35) des Auslassadapters (34) mit jeweils einem Abgangskanal (36, 37, 38) aufweist.

2. Mischbatterie nach Anspruch 1, wobei der an dem Wannenauslauf (11) des Batteriekörpers (20) angeschlossene Abgangskanal (38) des Auslassadapters (34) auf dem Umfang des Auslassadapters (34) endet, so dass das Mischwasser aus dem zugeordneten Abgangskanal (38) unmittelbar in den Wannenauslauf (11) des Batteriekörpers (20) einströmt.

3. Mischbatterie nach Anspruch 1 oder 2, **dadurch gekennzeichnet, dass** die Mischwasserabgänge (24, 25) für den Anschluss der Kopfbrause (14) und der Handbrause (15) an der einander gegenüberliegenden, um 90° zur Ebene der Wasseranschlüsse (22, 23) versetzt angeordneten Oberseite und Unterseite des Batteriekörpers (20) angeordnet sind und im Inneren des Batteriekörpers (20) liegende Verbindungen (45) zwischen dem Mischwasserabgang (24, 25) und den daran anzuschließenden Abgangskanälen (36, 37) des Auslassadapters (34) vorgesehen sind.

## Claims

1. A mixer tap (10) with three mixed water outflows (21, 24, 25), namely a bath spout (11) and a mixed water outflow respectively for an overhead shower (14) and for a hand shower (15), wherein a mixer body (20) constituted elongated comprises on a longitudinal side a water connection (22, 23) respectively for the cold and hot water to be supplied to the mixer body (20) and, on the one hand, an adjusting device for a temperature of mixed water to be delivered via the mixed water outflows (21, 24, 25) and, on the other hand, a switch-over cartridge (32) operated by means of a twist grip (31) for the optional connection of a mixed water outflow to the adjusting device are disposed on the mutually opposite end faces of the mixer body (20), wherein the adjusting device is constituted in the form of a single-lever mixer with a hand lever (27) and a mixing cartridge (26) for adjusting of a quantity and the temperature of the mixed water to be operated by the latter and wherein the switch-over cartridge (32) allows a 3-way-switching, **characterized in that** there is disposed in the mixer body (20), between the water connections (22, 23) for the cold and hot water and the mixing cartridge (26), an inlet adapter (28) with two supply channels (29) and a mixed water outflow (30) on the one hand and, at a distance therefrom constituting a water distribution space (46) in the mixer body (20), an outlet adapter (34) connected to the switch-over cartridge (32) on the other hand, said outlet adapter for its part comprising a mixed water channel (35) and outflow channels (36, 37, 38) each connected individually to each mixed water outflow (21, 24, 25) constituted in the mixer housing (20), and wherein the switch-over cartridge (32) comprises deflection chambers (33) disposed offset relative to one another over its circumference for the respective connection of the mixed water channel (35) of the outlet adapter (34) to, in each case, an outflow channel (36, 37, 38).

2. Mixer according to claim 1, wherein the outflow channel (38) of the outlet adapter (34) connected to the bath spout (11) of the mixer body (20) terminates on the periphery of the outlet adapter (34), so that the mixed water from the assigned outflow channel (38) flows directly into the bath spout (11) of the mixer body (20).

3. Mixer according to claim 1 or 2, **characterized in that** the mixed water outflows (24, 25) for the connection of the overhead shower (14) and the hand shower (15) are disposed on the mutually opposite upper and lower side of the mixer body (20) which are disposed offset by 90° to the plane of the water connections (22, 23) and connections (45) lying in the interior of the mixer body (20) are provided between the mixed water outflow (24, 25) and the outflow channels (36, 37) of the outlet adapter (34) to be connected thereto.

## Revendications

1. Mitigeur (10) doté de trois départs d'eau mitigée (21, 24, 25), à savoir d'une sortie dans baignoire (11) et de chaque fois un départ d'eau mitigée pour une douche de tête (14) et une douche manuelle (15), un corps de mitigeur (20) conçu en étant allongé en longueur comportant sur un côté longitudinal chaque fois un branchement d'eau (22, 23) pour l'eau froide et chaude qui doit être alimentée vers le corps de mitigeur (20) et sur les faces frontales situées en vis à vis l'une de l'autre du corps de mitigeur (20) étant placés d'une part un dispositif de réglage pour une température d'une eau mitigée devant être distribuée par l'intermédiaire des départs d'eau mitigée (21, 24, 25) et d'autre part, une cartouche d'inversion (32) devant être actionnée au moyen d'une poignée rotative (31) pour rajouter au choix un départ d'eau mitigée au dispositif de réglage, le dispositif de réglage étant conçu sous la forme d'un mitigeur à un levier avec un levier manuel (27) et d'une cartouche mitigeuse (26) devant être actionnée par ce dernier, pour le réglage de la quantité et de la température de l'eau mitigée et en ce que la cartouche d'inversion (32) permet une inversion à 3 voies, dans le corps de mitigeur (20), d'une part entre les branchements d'eau (22, 23) pour l'eau froide et l'eau chaude et la cartouche mitigeuse (26) étant placé un adaptateur d'entrée (28) avec deux canaux d'alimentation (29) et une sortie d'eau mitigée (30) et d'autre part, avec par rapport à ces derniers, un écart formant un espace distributeur d'eau (46) dans le corps de mitigeur (20), étant placé un adaptateur de sortie (34) raccordé sur la cartouche d'inversion (32), qui pour sa part, comporte d'une part un canal d'eau mitigée (35), ainsi que des canaux de départ (36, 37, 38) raccordés chaque fois individuellement sur chaque départ d'eau mitigée (21, 24, 25) conçus dans le corps de mitigeur (20), **caractérisé en ce que** la cartouche d'inversion (32) comporte des chambres de renvoi (33), placées en déport l'une par rapport à l'autre, sur la périphérie de cette dernière, pour la liaison respective du canal d'eau mitigée (35) de l'adaptateur de sortie (34) avec chaque fois un canal de départ (36, 37, 38).

2. Mitigeur selon la revendication 1, le canal de départ (38) de l'adaptateur de sortie (34) raccordé sur la sortie dans baignoire (11) du corps de mitigeur (20) se terminant sur la périphérie de l'adaptateur de sortie (34), de sorte que l'eau mitigée afflue hors du canal de départ (38) associé, directement dans la sortie dans baignoire (11) du corps de mitigeur (20).

3. Mitigeur selon la revendication 1 ou 2, **caractérisé en ce que** pour le branchement de la douche de tête (14) et de la douche manuelle (15), les départs d'eau mitigée (24, 25) sont placés sur la face supérieure et la face inférieure du corps de mitigeur (20) en vis-à-vis, en étant déportés de 90° par rapport au plan des branchements d'eau (22, 23) et **en ce que** des liaisons (45) situées à l'intérieur du corps de mitigeur (20) sont prévues entre le départ d'eau mitigée (24, 25) et les canaux de départ (36, 37) de l'adaptateur de sortie (34) qui doivent être raccordés sur ce dernier.
